Europäisches Patentamt

**European Patent Office**

**Office européen des brevets**

(11) Publication number: **0 213 090**
**A1**

## (12) EUROPEAN PATENT APPLICATION

(21) Application number: **86830217.5**

(22) Date of filing: **22.07.86**

(51) Int. Cl.⁴: **C08F 10/02 , C08F 4/64**

(30) Priority: **23.07.85 ES 545469**

(43) Date of publication of application:
**04.03.87 Bulletin 87/10**

(84) Designated Contracting States:
**DE FR IT NL**

(71) Applicant: **EMPRESA NACIONAL DEL PETROLEO S.A. (EMPETROL-EMP) Société dite:**
**José Abascal, No 4**
**28003 Madrid(ES)**

(72) Inventor: **Hernandez-Vaquero Alvarez, Jose' Luis**
**Francisco de Ricci 11**
**E-28015 Madrid(ES)**

(74) Representative: **La Ciura, Salvatore**
**Via Francesco Sforza 5**
**I-20122 Milano(IT)**

(54) Improvements in a procedure for polymerisation and copolymerisation of ethylene at high pressures and temperatures.

(57) 1. Improvements in a procedure for polymerization and copolymerisation of ethylene at high pressures and temperatures, by means of a catalytic system corresponding to an activator (a) selected from among the alkyl aluminiums and alkyl siloxalanes, the catalytic system also comprising a compound (b) of formular $(TiCl_3)$ $(AlCl_3)_a$ $(MgCl_2)_b$ $(E)_c$, obtained by comolturation of titanium trichloride or titanium trichloride crystallised with aluminium trichloride, with magnesium chloride and with an electron donor compound (E) selected from among the alcohols, ethers, aldehydes, esters and carboxylic acids in such quantities that $0 \leq a \leq 1$, $1 \leq b \leq 10$ and $0.01 \leq c \leq 1$.

EP 0 213 090 A1

This invention relates to an improved procedure for the polymerisation of ethylene, and/or its copolymerisation with alpha-olefins, at high pressure and temperature, utilising Ziegler type catalysts.

Polymerisation of ethylene at high temperature and pressure according to an ionic mechanism is well known thanks to a catalytic system comprising, on the one part, a halogenated compound of transition metal such as titanium trichloride -eventually cocrystallised with aluminium trichloride -and on the other part, an organo aluminium activator such as trialkylaluminium or an alkyl siloxalane. Also known by Belgian Patent N° 805,758 is the polymerisation of ethylene at high pressure and temperature by means of a catalyst obtained by reaction between a halogenated derivative of transition metal and a compound of formula $Cl_{2n}Mg(CR)_n$, in which n = 1 or 2, and R is a hydrocarbonated radical. The introduction into the polymerisation medium of small quantities of hydrogen which performs the role of transfer agent is also known.

Both the procedures mentioned above have in common that their catalytic systems are highly sensitive to the influence of hydrogen and the temperature. Thus, thermal destruction reactions, the activation energies of which are higher than those of the polymerisation reaction, acquire such speeds that the catalytic yield decreases notably above 200°C and the content in catalytic residues becomes generally unacceptable above 260°C. Likewise, the ethylene dimerisation and trimerisation speeds become such that the density of the polyethylene obtained does not cease to decrease to unacceptable values for an injection moulding quality. Lastly, thermal transfer reactions become so numerous that the various mechanical properties of the resins diminish very steeply when the polymerisation temperature exceeds 260°C.

To palliate these problems, Spanish Patent 456,321 claims the use of a catalytic system comprising an activator (a) selected from among the alkyl aluminiums and alkylsiloxalanes, characterised because the catalytic system further comprises a compound (b) of formula (TiCla) (MgCl$_2$) and -(AlCl$_3$)$_s$ (RMgCl)$_b$ in which $2 \leq a \leq 3$, $y \geq 2$, $0 \leq s \leq 1/3$, $0 \leq b \leq 1$ and R is an aliphatic or aromatic hydrocarbonate radical, the proportions of (a) and -(b) being chosen to obtain an atomic ratio Al/Ti between 1 and 10.

Now it has been discovered that it is possible to obtain resins with good mechanical properties at temperatures of up to 350°C and pressures of up to 3,000 bar, with catalytic residues permitting their utilisation without any later treatment, by the use of a catalytic system comprising (a) an activator selected from among the alkyl aluminiums and alkylsiloxalanes and (b) a compound of formula (TiCl$_3$) -(AlCl$_3$)$_a$ (MgCl$_2$)$_b$ (E)$_c$, in which $0 \leq n \leq 1$, $1 \leq b \leq 10$ and $0.01 \leq c \leq 1$, where (E) is an electron donor compound selected from among the alcohols, ethers, ketones, aldehydes, esters and carboxylic acids.

By the use of these new catalytic systems, the yields obtained with the catalysts known at present are achieved better, which means lower catalyst costs and the obtainment of more stable resins as they contain less catalytic residues.

In a known way, the procedure of the invention is conducted in at least one stirred reactor presenting at least one reaction zone, the time of stay of the catalyst in each reaction zone being comprised between 1 and 150 seconds. It may be conducted in several reactors connected in series. It may also be conducted using an inert diluent, such as propane or butane, to ensure the homogeneity of the reaction medium in the first zone, although to obtain the same effect, it is sufficient to raise the temperature without danger to the properties of the resin. The proportions of (a) and (b) are chosen to obtain an atomic ratio Al/Ti between 2 and 20.

There are various methods of preparation of the compounds of formula (TiCl$_3$) (AlCl$_3$)$_a$ (MgCl$_2$)$_b$-(E)$_c$, utilised in the procedure of the invention.

According to one variant of the invention it is particularly advantageous to produce compound -(b) of the catalytic system by milling in two stages. In the first stage the milling of MgCl$_2$ is effected with the E compound and in a second stage the comilling is effected of the product obtained in the first with (TiCl$_3$) and (AlCl$_3$).

The catalytic component thus obtained may be utilised in suspension in an inert hydrocarbon or may advantageously be preactivated by the prepolymerisation of an alphaolefin, as is well known by experts in the art.

The following examples, which are not limitative, illustrate the various advantages of the present invention:

EXAMPLE 1 (comparative)

The catalytic solid utilised has been obtained by cocrushing an anhydrous magnesium chloride and a violet titanium trichloride sold by the company TOHO TITANIUM under the commercial name TAC-191. Its composition by weight is the following:

$$Mg = 11.4$$

$$Ti = 10.6\%$$

$$Cl = 76\%$$

$$Al = 2\%$$

This catalytic solid is preactivated with diethyl aluminium chloride up to an atomic ratio Al/Ti = 1 and then prepolymerised with hexene-1 in a medium of n-heptane.

Polymerisation is effected in a stirred autoclave reactor with a reaction zone at a temperature of 240°C and under a pressure of 1,200 bar.

The volumetric composition of the reagent gas is 60% ethylene, 38.5% butane and 0.5% hydrogen used as a chain transfer agent.

The injection of the preactivated catalytic component is effected by a double piston pump, and a solution of dimethylethyldiethylsiloxalane is injected at the inlet to the reactor so that the atomic ratio Al/Ti is equal to 13. The stay of the catalytic system in the reactor is 60 seconds, and after 10 hours of continuous operation 20 kg of polyethylene of I.F. = 1.0 g/10 min and = 0.9210 g/cc is obtained with a yield of 4.2 kg PE/g catalyst.

## EXAMPLE 2

The catalytic solid utilised was obtained by the milling of anhydrous magnesium chloride and ethyl benzoate in a molar ratio of MgCl₂/RB = 5 in a first stage and later comilling of this product with TAC-191 to finally obtain a solid, the content in Ti by weight of which is 12.7%.

Prepolymerisation is effected in the same conditions as example 1 but increasing the reaction temperature to 250°C and feeding a gaseous current of the following volumetric composition: ethylene 65%, butene 34.9% and hydrogen 0.1%.

In 24 hours of continuous operation 50 kg of polymer of I.F.= 0.9 and = 0.920 g/cc were obtained, with a yield of 15 kg PE/g catalyst.

## EXAMPLE 3

The catalytic solid was prepared in the same way as in the previous example but substituting ethyl benzoate by butyl benzoate in a molar ratio MgCl₂/RB = 4.The percentage of Ti in the catalytic solid was 10%.

The conditions of activation and polymerisation were the same as in the previous example but the reaction temperature was 265°C.

After 24 hours of continuous operation 34 kg of polymer of I.F.= 1.3 g/10 min and = 0.923 g/cc were obtained, with a yield of 16 kg PE/g catalyst.

As can be seen in examples 2 and 3 as against comparative example 1 the utilisation of the catalysts described in the framework of this invention makes it possible to obtain substantially higher catalytic yields than the known catalysts in the state of the art.

## Claims

1. Improvements in a procedure for polymerisation and copolymerisation of ethylene at high pressures and temperatures, of the type effected at pressures of up to 3,000 bar and temperatures above 140°C, in at least one stirred reactor comprising at least one reaction zone, by means of a catalytic system corresponding to an activator (a) selected from among the alkyl aluminiums and alkyl siloxalanes, said improvements characterised because the catalytic system also comprises a compound (b) of formula (TiCl₃) (AlCl₃)ₐ (MgCl₂) ᵦ - (E)꜀, obtained by comolturation of titanium trichloride or titanium trichloride crystallised with aluminium trichloride, with aluminium trichloride, with magnesium chloride and with an electron donor compound (E) selected from among the alcohols, ethers, aldehydes, esters and carboxylic acids in such quantities that 0 ≤ a ≤ 1, 1 ≤ b ≤ 10 and 0.01 ≤ c ≤1.

2. Improvements in a procedure for polymerisation and copolymerisation of ethylene at high pressures and temperatures, according to claim 1, characterised because the stay of the catalytic system in the reactor is between 1 and 150 seconds.

3. Improvements in a procedure for polymerisation and copolymerisation of ethylene at high pressures and temperatures, according to claims 1 and 2, characterised because the quantities of components (a) and (b) will be chosen in such a way that the molar ratio Al/Ti will be between 2 and 20.

4. Improvements in a procedure for polymerisation and copolymerisation of ethylene at high pressures and temperatures, according to claims 1 to 3, characterised because compound (b) is produced in two stages of milling. In the first stage it is milled (MgCl₂) with compound (E) and in the second this product is comilled with (TiCl₃) and - (AlCl₃).

5. Improvements in a procedure for polymerisation and copolymerisation of ethylene at high pressures and temperatures, according to claims 1 to 4, characterised because the ethylene is copolymerised with an alpha-olefin of less than 10 carbon atoms.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 235 033 (MITSUI TOATSU)<br>* Claims; examples 1,2-6 * | 1-5 | C 08 F 10/02<br>C 08 F 4/64 |
| D,Y | FR-A-2 342 306 (SOCIETE CHIMIQUE DES CHARBONNAGES)<br>* Claims; examples * | 1-5 | |
| Y | FR-A-2 453 184 (STAMICARBON)<br>* Claims 1,6,7-14; page 2, lines 19-26 * | 1 | |

TECHNICAL FIELDS SEARCHED (Int. Cl.4)

C 08 F

The present search report has been drawn up for all claims

| Place of search | Date of completion of the search | Examiner |
|---|---|---|
| THE HAGUE | 06-11-1986 | DE ROECK R.G. |